# EUROPEAN PATENT APPLICATION

(11) **EP 1 387 269 A1**
(43) Date of publication of application: **04.02.2004**
(21) Application number: 02354119.6
(22) Date of filing: 02.08.2002
(51) Int. Cl.: G06F 11/14

(54) **Backup system and method of generating a checkpoint for a database**

(71) Applicant: Hewlett Packard Company, a Delaware Corporation, Palo Alto, CA 94304 (US)
(72) Inventor: Pofelski, Lech, 38240 Meylan (FR)
(74) Representative: Lloyd, Richard Graham

(57) **Abstract**

A backup system for a database, the backup system being operable to;
store a preceding checkpoint containing the contents of the database,
receive at least one transaction log, the at least one transaction log identifying changes to the contents of the database,
generate a new checkpoint by merging the preceding checkpoint and the at least one transaction log,
and store the new checkpoint. For faster generation of the new checkpoint, the or each transaction log is sorted prior to merging the or each transaction log with the checkpoint.

## Description

### Field of the Invention

This invention relates to a backup system for a database, a data handling system comprising a backup system, and a method of generating a checkpoint for a database.

### Background of the Invention

To provide a backup system for a database, for example to guard against failure of computer on which the database is held, it is known to store a separate copy of the contents of the database, conventionally referred to as a checkpoint. This is of particular importance where the database is held in a volatile storage medium, particularly in a random access memory (RAM) of a computer. Conventionally, new checkpoints are taken at intervals, for example after a predetermined time has elapsed since the previous checkpoint, or when a sufficient number of changes have occurred to the database. In the event of failure of the computer of loss or corruption or damage to the database, the database can be restored to the state at the most recent checkpoint.

Where the database is very large, for example in telecommunication applications where the database may be on the order of a gigabyte or more, the process of generating a checkpoint can be particularly time consuming, potentially over an hour. Since the process of reading the database content and writing the content to a suitable storage medium will require use of the processing capacity and communication bandwidth of the computer on which the database is stored, it is clearly advantageous to reduce the time spent generating a checkpoint.

Because the database will have been updated, after the checkpoint has been taken, the checkpoint is conventionally referred to as "fuzzy" in that it represents a past state of the database, that is one which is not entirely up to date. To record these updates, it is known to generate transaction logs, that is files recording the changes to the database since the generation of the most recent checkpoint. Transaction logs may be generated, written to and closed and new transaction logs opened in response to appropriate criteria, for example at predetermined time intervals or at a maximum desired file size for a transaction log or any other user defined criteria. Particularly in the example of telecommunication systems, whilst the checkpoint is being generated, the computer on which the database is held will still be active and so transaction logs may be generated during the generation of a checkpoint, as well as subsequent to the generation of a checkpoint.

When it is desired to rebuild the database, the process of rebuilding the database begins by writing the most recent checkpoint into memory, and then progressively updating the in-memory database in accordance with the transaction logs. In the example of telecommunication systems, the process of updating the most recent checkpoint using the stored transaction logs may account for as much as half the time taken by the rebuild process, with consequent delays in bringing a computer back on-line after a failure. It is also known to read the checkpoint and transaction logs to generate a copy of the database for auditing or management purposes, and a similar disadvantages result.

An aim of the present invention is to provide a new or improved backup system and/or method of generating a checkpoint which overcomes one or more of the above problems.

### Summary of the Invention

According to a first aspect of the invention, we provide a backup system for a database, the backup system being operable to store a preceding checkpoint containing the contents of the database, receive at least one transaction log, the at least one transaction log identifying changes to the contents of the database, generate a new checkpoint by merging the preceding checkpoint and the at least one transaction log and store the new checkpoint.

The backup system may be operable to sort the or each transaction log prior to merging the or each transaction log with the preceding checkpoint.

The backup system may be operable to receive a plurality of transaction logs, wherein the transaction logs are sorted to combine the transaction logs prior to merging the transaction logs with the preceding checkpoints.

The backup system may comprise a data storage medium and a memory, wherein the checkpoint is stored on the data storage medium and the or each transaction log is sorted in the memory.

The backup system may be operable to store at least one transaction log prior to generating a new checkpoint.

According to a second aspect of the invention, we provide a data handling system comprising a backup system according to the first aspect of the invention and a database system, the database system comprising a memory, and being operable to store a database in the memory, the database system being operable to update the database in response to a transaction, record the transaction in a log, and transmit the transaction log to the backup system.

The data handling system may be operable to transmit the checkpoint to the database system to rebuild the database.

The backup system may be operable to store at least one transaction log after generation of the checkpoint and may be operable to transmit the at least one transaction log to the database system with the checkpoint.

The data handling system may comprise a data storage medium wherein a copy of the database is stored, the backup system being operable to transmit the checkpoint to the management system so that the database may be audited and/or the copy of the database synchronised with the database using the checkpoint.

According to a third aspect of the invention, we provide a method of generating a checkpoint for a database, the method comprising the steps of receiving at least one transaction log, the at least one transaction log identifying changes to the database, and merging the transaction log with a preceding checkpoint to generate a new checkpoint.

The or each transaction log may be sorted prior to the step of merging the or each transaction log with the preceding checkpoint.

### Brief Description of the Drawings

An embodiment of the present invention will be described by way of example only with reference to the accompanying drawings wherein;
Figure 1 is a diagrammatic illustration of a known prior art telecommunication system,
Figure 2 is a diagrammatic illustration of a telecommunication system embodying the present invention,
Figure 3 is a diagrammatic illustration of a method of generating a checkpoint embodying the present invention, and
Figure 4 is a graph illustrating the optimisation of the method of Figure 3.

### Detailed Description of the Preferred Embodiments

In the following description, an embodiment of the invention will be described with reference to a telecommunications application. It will be apparent to the skilled reader however, that the invention described herein will be applicable to any appropriate database where it is desired that checkpoints be provided, for example in a appropriate real time control system.

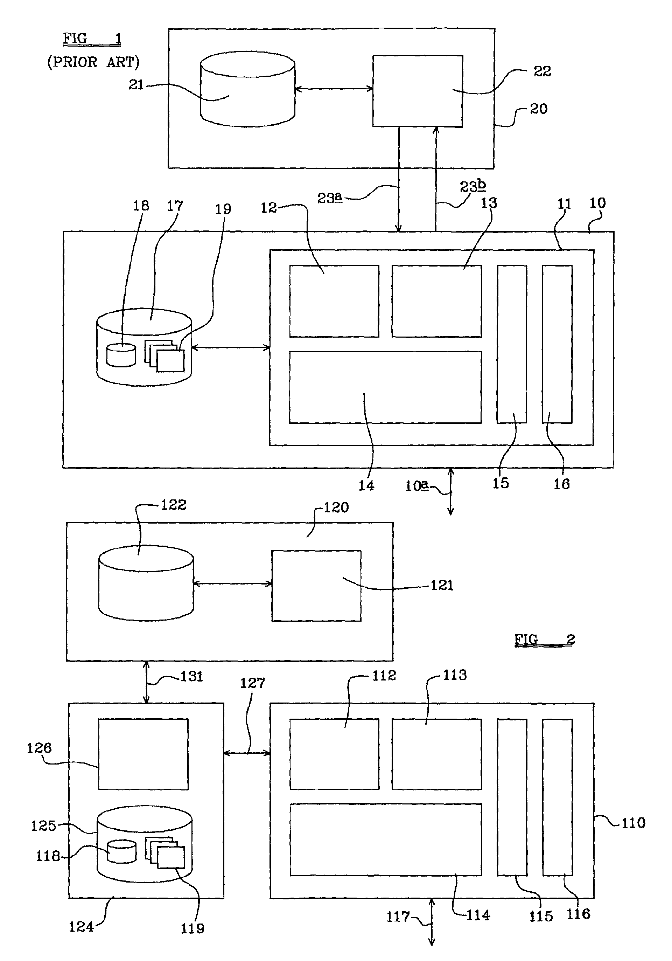

Referring to Figure 1 as an illustration of a known system, a service control point such as an HP Open Call (TM) service execution platform (SEP) is shown at 10, provided with an appropriate connection 10a to a signalling network. The SEP 10 comprises a service execution platform host 11 provided with an in-memory database 12 held in RAM, a service logic execution environment 13, appropriate protocol stacks 14, an event manager 15 and a fault tolerance controller 16. The SEP 10 further comprises a local data storage medium, in the present example a disk 17. Conventionally, a service execution platform will comprise two service execution platform hosts 11 in a "mated-pair" configuration to provide for high availability such that the platform continues to operate even in the event of failure of one of the service execution platforms 10.

The in memory database 12 is used to store all of the information necessary to provide a service and other functions as desired, for example to store and provide call information and billing information and any other information as desired. The database is held as an in-memory database 12 for speed of access. To provide for recovery of the contents of the in-memory database 12, at least one checkpoint 18 and a plurality of transaction logs 19 are stored on the local disk 17. To generate a checkpoint 18, the contents of the in-memory database 12 are copied to the local disk 17 conventionally at a rate of 1 megabyte per second. Since a in-memory database 12 can be on the order of a gigabyte or more, this is necessarily time consuming, for example taking up to an hour or so. Checkpoints are usually made every two to four hours, whilst updates are recorded continually in the transaction logs 19. Each transaction log is closed and a new log opened depending on chosen criteria, for example at predetermined time intervals or the desired size of the log file. During checkpoint generation a proportion of the SEP hosts 11 processing power and communication bandwidth will be taken up with transmission of the contents of the in-memory database 12 to the disk 17.

For management and auditing purposes, it is known to provide a further system, in the present example a service management platform (SMP) 20. The SMP 20 comprises a data storage medium 21 on which copies of a number of different in-memory databases 12 of different SEP's 10 are held, and an input/output controller 22 to communicate with the SEP 10. Because the in-memory database 12 and the copy held on the data storage medium 21 should be synchronised, changes are propagated "down" from the SMP to the SEP as shown by arrow 23a and "up" from the SEP 10 to the SMP 20 as shown by arrow 23b via the input/output controller 22. Periodically, the copy of the database held on the data storage medium 21 is audited by comparing the content with the contents of the in-memory database 12 which is time consuming and similarly draws on the processing and bandwidth resources of the SEP host 11.

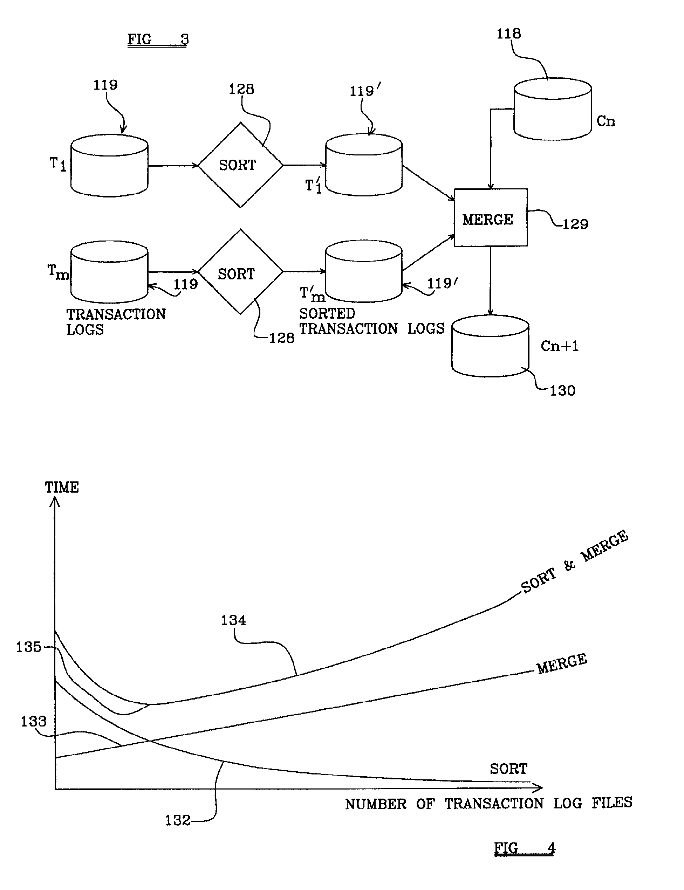

Referring now to Figure 2, a service execution platform is shown at 110 similar to the SEP 10. In like manner, the SEP 110 comprises an in-memory database 112, a service logic execution environment 113, a plurality of network stacks 114, a event manager 115 and a fault tolerance controller 116. The SEP 110 has an appropriate connection 117 to a signalling network. A service management platform is shown at 120 similar to the SMP 20, comprising a digital storage medium 121 and an input/output controller 122. A backup system is shown at 124, comprising a data storage medium, in the present example a disk 125, and a memory 126. Stored on the disk 125 is at least the most recent checkpoint 118 and a plurality of transaction logs 119. In practice,_at least the two most recent checkpoints and associated logs will be stored on the disk 125.

The SEP 110 and backup system 124 operate as follows When the in-memory database 112 is updated, for example as a result of network messages received over the connection 117, the SEP 110 will record the update or "transaction" on a file, or transaction log, and transmit it to the backup system 124 as shown by arrow 127. The transaction log 119 will be recorded in the disk 125. The transaction log 119 will contain one or more updates, each update comprising the old data, the new data and information identifying the database location which has been updated, in particular a table identifier and a row key. Each transaction log will further contain an update serial number which provides a unique identifier for each update. The number of updates stored in a single transaction log 119 may be selected as discussed below.

When it is desired to establish a new checkpoint, the backup system 124 will operate as shown in Figure 3. The backup system 124 will read all the transaction logs T₁-Tₘ as shown at 119 into memory and sort the transaction logs T₁ to Tₘ into temporary files for efficient merging as shown at step 128. Where the in-memory database 112 comprises a relational database, the transaction logs will identify the database location using one or more table identifiers and row keys, and this sorting process may advantageously and efficiently be performed by sorting each transaction listed in the transaction logs T₁ to Tₘ by the appropriate table identifiers, row keys, and update serial number. The sorting by update serial number is desirable because the same location may have been updated more than once and sorting the transactions by update serial number will ensure that the transactions are applied to the location in the correct order. The most recent checkpoint Cₙ as shown at 118 is then merged with the sorted transaction logs T'₁ - T'ₘ shown at 119' at step 129 to generate a new checkpoint Cₙ₊₁ as shown at 130. This updated checkpoint is then stored on the local storage medium 125. The step 128 of sorting the transaction logs T₁-Tₘ and checkpoint Cₙ is preferably performed in the memory 126 to speed up the sorting process and not performed by reading and writing to the storage medium 125. Advantageously, the transaction logs T₁-Tₘ will be effectively merged by the sorting step 128 so that the merge step 129 consists simply of writing the combined content of the transaction logo T₁-Tₙ to the checkpoint C_{n+1.}

After generation of the checkpoint Cₙ+1, the transaction logs T₁-Tₘ and temporary sorted transaction logs T'₁-T'ₘ may be discarded.

The backup system 124 and SEP 110 may be initialised together, such that the in-memory database 112 is initially empty and the first checkpoint C₀, is a null file. Alternatively, C₀ may comprise a checkpoint made in conventional manner by writing the initial contents of the in-memory database 112 to the backup system 124.

It will thus be apparent that, in accordance with the present invention, the only call on the processing and bandwidth capacity of the SEP 110 is that necessary to transmit a transaction log to the backup system 124. The new checkpoints Cₙ₊₁ is generated simply by updating the most recent checkpoint Cₙ in view of the transaction logs 119. The method of generating a new checkpoint is entirely performed by the dedicated backup system 124, thus speeding up the process of generating the checkpoint and not demanding any of the processing or bandwidth capacity of the service execution platform 110. The up to date checkpoint Cₙ₊₁ is then available for use as may be desired, for example to restore the in memory database 112 by being transmitted to the SEP 110 along with any recent transaction logs 119 to the SEP as shown by arrow 127, or for transmission to, for example, the service management platform 120 as shown by arrow 131 for the purposes of auditing the in-memory database 112 or synchronising the database copy held on the storage medium 121. The process of generating the checkpoint may be performed relatively frequently compared to known methods to minimise the number of transaction logs required. It will be apparent that when it is necessary to, for example, restore the in-memory database 112, the most recent checkpoint Cₙ₊₁ will either be up to date or almost up to date, and that a relative quick recovery process will be performed.

It will be possible to optimise the number and size of the transaction logs 119 held on the data storage medium 125. Where the transactions are stored in a relatively large number of relatively small files, the sorting step 128 will be faster because there will be more, relatively quick sorting operations performed in the memory 126 and fewer steps of reading the disk 125 which are relatively slow. However, with a greater number of files, the time taken for the merge step 129 will increase as it will be necessary to read the disk 125 more often to retrieve more files. This trade off is illustrated in Figure 4, where the X axis shows the number of transactions or files into which the transactions are stored, the Y axis shows the time taken to perform the sorting and merging steps, line 132 shows the time taken for the sorting operation, line 133 shows the time taken for the merge operation 130 and line 134 shows the total time for the sort step 128 and the merge step 129. It will be apparent that there is an optimum minimum at point 135.

It will be apparent that the backup system 124 may advantageously be separate from the SEP 110. Indeed, the backup system 124 may be physically removed from the SEP 110. Alternatively, the separation of the backup system 124 and SEP 110 may be "virtual", that is the backup system 124 resides on the same computer as the SEP 110 but uses dedicated resources, for example a dedicated CPU. Separation of the backup system 124 from the SEP 110 ensures that checkpoint generation does not use any of the bandwidth of the SEP CPU, or any of the bandwidth required to access the in-memory database 112, leaving it available for use.

For faster recovery of the in memory database 112, it maybe advantageous to have the most recent checkpoint available on the SEP 110, for example by providing a shared disk between the backup system 124 and SEP 110.

In the method of Figure 3, where there are many logs T₁ to Tₙ, the process of sorting all of the logs at stage 128 and merging all the logs with the previous check point at step 129 allows the merge step to be performed with a read stage to read the previous check point once from the disk 125 and a single write phase to write the new checkpoint to the disk 125. The number of transaction logs 119 maintained on the disk 125 may be much smaller than those stored on conventional systems and new checkpoints may be generated more frequently.

It is known that on some computers, where a CPU is instructed to write large volumes of data, that CPU is then unavailable for any other operation. In this case, and writing small transmission logs to the backup system 124, the CPU of the SEP 10 is made available for other operations and is not blocked in such a manner.

In the present specification "comprises" means "includes or consists of and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A backup system for a database, the backup system being operable to;
store a preceding checkpoint containing the contents of the database,
receive at least one transaction log, the at least one transaction log identifying changes to the contents of the database,
generate a new checkpoint by merging the preceding checkpoint and the at least one transaction log,
and store the new checkpoint.

2. A backup system according to claim 1 operable to sort the or each transaction log prior to merging the or each transaction log with the preceding checkpoint.

3. A backup system according to claim 2 operable to receive a plurality of transaction logs, and wherein the transaction logs are sorted to combine the transaction logs prior to merging the transaction logs with the preceding checkpoint.

4. A backup system according to claim 2 or claim 3 comprising a data storage medium and a memory, wherein the checkpoint is stored on the data storage medium and the or each transaction log is sorted in the memory.

5. A backup system according to any one of the preceding claims operable to store at least one transaction log prior to generating a new checkpoint.

6. A data handling system comprising a backup system according to any one of the preceding claims and a database system, the database system comprising a memory, and being operable to store a database in the memory, the database system being operable to update the database in response to a transaction, record the transaction in a log, and transmit the transaction log to the backup system.

7. A data handling system according to claim 6 wherein the backup system is operable to transmit the checkpoint to the database system to rebuild the database.

8. A data handling system according to claim 7 wherein the backup system is operable to store at least one transaction log after generation of the checkpoint and wherein the backup system is operable to transmit the at least one transaction log to the database system with the checkpoint.

9. A data handling system according to claim 6 or claim 7 or claim 8 further comprising a management system, the management system comprising a data storage medium wherein a copy of the database is stored, the backup system being operable to transmit the checkpoint to the management system.

10. A method of generating a checkpoint for a database, the method comprising the steps of;
receiving at least one transaction log, the at least one transaction log identifying changes to the database, and
merging the transaction log with a preceding checkpoint to generate a new checkpoint.

11. A method according to claim 10 comprising the step of sorting the or each transaction log prior to the step of merging the or each transaction log with the preceding checkpoint.
